# EUROPEAN PATENT SPECIFICATION

(11) **EP 0 921 974 B1**
(45) Date of publication and mention of the grant of the patent: **31.10.2001**
(21) Application number: 97936910.5
(22) Date of filing: 28.08.1997
(51) Int. Cl.: B62D 21/12

(54) **STEERING GEAR ARRANGEMENT FOR A VEHICLE**
LENKGETRIEBEANORDNUNG FÜR EIN FAHRZEUG
AGENCEMENT DE MECANISME DE DIRECTION D'UN VEHICULE

(30) Priority: 30.08.1996 SE 9603142
(43) Date of publication of application: 16.06.1999
(73) Proprietor: Scania CV Aktiebolag (publ), 151 87 Södertälje (SE)
(72) Inventor: BOREHALL, Hans, S-641 47 Katrineholm (SE); BERGSTRÖM, Lars, S-633 69 Eskilstuna (SE); EKLUND, Hans, S-641 51 Katrineholm (SE)
(74) Representative: Waldebäck, Hans Olov
(86) International application number: SE9701423
(87) International publication number: WO9808726

(56) References cited:
- SE-C- 500 883

## Description

The invention relates to a steering gear arrangement for a vehicle in accordance with the preamble to patent claim 1.

### State of the art

Vehicles such as buses are usually fitted with a steering gear which forms part of their steering system and is contained in the steering gear box which is itself fastened to load-bearing parts of the vehicle such as a cross-member forward of the latter's steerable front wheels. The steering gear box has the advantage of providing a space in which the steering gear can be fitted, and the further advantage of a shape which permits and facilitates the fastening of other parts to the vehicle frame. In a bus the shape of the steering gear box may be such as to make it easy, via the steering gear box, to fasten a driving compartment module to the vehicle frame. This makes it possible for a steering wheel arranged in the driving compartment to be connected via bevel gearing to the steering gear which is itself connected via a link to the link mechanism which effects the steering. This assembly not only permits advantageous orientation of constituent components but also provides them with protection from external influences.

Such a steering gear arrangement in accordance with the preamble of claim 1 is known from WO-A-9514603 in which the steering gear module incorporates a steering gear and is firmly connected to a front wheel module and is fastened to a compartment module.

The way the steering gear is fitted in the steering gear box is usually designed so that the steering gear, which is inherently irregular in shape, is fitted to the bottom of the steering gear box. To make steering gear replacement or servicing possible in case of need, the steering gear is fastened by bolted connections.

A disadvantage of this arrangement is that access to the steering gear fastening bolts is limited, thereby making it difficult to fit the steering gear both during bus manufacture and during steering gear servicing. Access is substantially worsened by the steering gear being contained in a steering gear box. It is nevertheless desirable for the steering gear to be contained in a box, as this makes it easier to fit other components.

### Object of the invention

The purpose of the invention is to eliminate these disadvantages. Its object is therefore to make good access to the steering gear assembly bolts possible so that the steering gear can be easily fitted and removed, while at the same time it is possible to maintain the external shape of the steering gear box as a protective location for the steering gear.

In this respect the invention is characterised by the features indicated in the characterising part of patent claim 1.

Other features distinguishing the invention are indicated in the description below of an embodiment with reference to the attached drawing.

### List of drawings

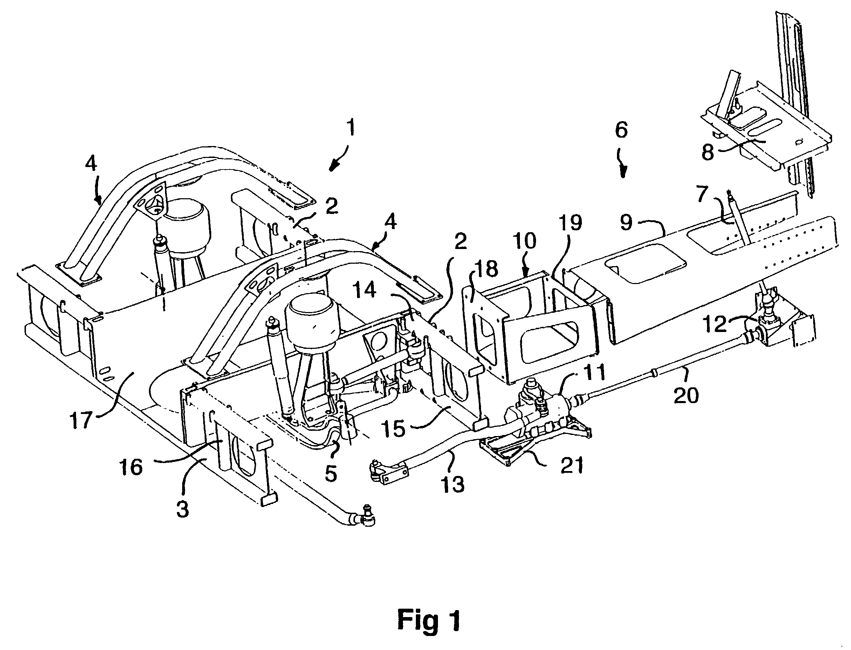

Fig. 1 shows an exploded diagram of the basic composition of a forward portion of a vehicle chassis.

### Description of an embodiment

Fig. 1 shows a forward section of a vehicle chassis, more specifically a chassis for a bus. A wheel housing module 1 intended for a steerable front wheel of the bus incorporates a front axle 5 with conventional components for wheel suspension such as shock absorbers, steering system and the like, but the wheel is left undepicted to improve the clarity of other components more essential to the invention.

The wheel housing module 1 is composed of two cross-members 2,3 which are arranged on either side of the wheel and have extending between them two wheel housing frames 4 which each consist of two bent members. The front cross-member 2 has extending in front of it, in the direction of forward movement of the vehicle, a driving compartment module 6 of which only certain components are depicted, such as a steering wheel stem intended to support a steering wheel, a floor plate 8 intended to support a pedal stand, a longitudinal floor member 9 intended for fitting a driving compartment floor, and a steering gear box 10 arranged between the front cross-member 2 and the floor member 9. The steering gear box 10 accommodates a steering gear 11 which converts a rotary motion transmitted from the steering wheel stem 7 via a bevel gear 12 to an axle displacement movement of a control rod 13 which protrudes from the steering gear 11 and which can in a conventional manner act upon the steering system which acts upon the wheels.

The driving compartment module 6 which is depicted in Fig. 1 is situated on the right side of the bus, so the chassis is for a righthand drive bus. The two depicted cross-members 2,3 each consist of a lattice beam with an upper section 14 and a lower section 15 which are connected together by a number of cross-braces 16. The lower beam sections 15 extend across the whole width of the bus, while the upper beam sections 14 are divided into two beam sections on either side of a central gangway section 17. This construction is characteristic of so-called low-floor buses in which passengers have to be able to pass between the wheel housings of the wheel housing module 1. The height of the cross-members 2,3 is at least approximately the same as the height of the steering gear box 10 which is fastened to the front cross-member 2 on the right side by bolted connections via a rear end wall 18.

A front end wall 19 of the steering gear box 10 has removably fastened to it the floor beam 9 to which the undepicted driving compartment floor is fastened. The floor beam 9 has a substantially channel section shape with the open side facing downwards. The floor member 9 is thus also fastened to the cross-member 2 via the steering gear box 10.

The front end wall 19 of the steering gear box is provided with an aperture through which extends a shaft 20 for transmitting rotary movements between the bevel gear 12 and the steering gear 11. This shaft 20 is likewise accommodated in the floor member 9 which has the bevel gear 12 fastened to its front end by bolted connections. The rear end wall 18 of the steering gear box is similarly provided with an aperture through which extends the control rod 13 which connects the steering gear 11 to the remainder of the steering system. This control rod 13 extends between two cross-braces 16 of the cross-member 12. The result is a protected location not only for the steering gear 11 but also for the bevel gear 12 and the shaft 20 and the control rod 13 connected to them.

The steering gear box 10 also has two sidewalls which are also provided with apertures, mainly with a view to facilitating access to the steering gear when it is fitted in the steering gear box 10. The steering gear box 10 thus has a substantially parallelepipedic shape.

With a view to facilitating the fitting of the steering gear 11 in the steering gear box 10, the latter is provided with a removable bottom but no top cover. The first assembly step is to fit the loose steering gear 11 to the steering gear box bottom 21, which it is advantageous to carry out as a pre-assembly operation. In bus chassis manufacture the steering gear box 10, without its bottom 21, is fitted to the chassis cross-member 2 together with other chassis parts such as the floor member 9. Thereafter it is easy to fit the steering gear 11 to the chassis by inserting the steering gear box bottom 21, and the steering gear 11 pre-assembled on it, upwards into the steering gear box 10 from below, followed by fastening the steering gear box bottom 21 to the steering gear box 10, e.g. by bolted connections. Thereafter the shaft 20 from the bevel gear 12 and the control rod 13 are connected to the steering gear. In an advantageous embodiment the shaft 20 or the control rod 13 may be pre-assembled to the steering gear 11 in order to further increase the degree of pre-assembly and reduce the amount of fitting to be done during final assembly.

Adopting a loose bottom 21 for the steering gear box 10 makes it easy to remove the steering gear 11 for servicing or replacement. It also means that the bottom can be adapted (e.g. with regard to bolting configurations) to a particular model of steering gear. The same steering gear box can be used for different steering gears and the only individual adaptation required is to adapt the bottom to the particular steering gear design. This makes possible a high degree of standardisation with corresponding economic savings.

The removable bottom 21 of the steering gear box need not itself form a closed bottom to the steering gear box, but may take the form of a frame, bracket or other component which can be fitted to the steering gear box 10 from below. In alternative embodiments the steering gear may be fitted to some other of the wall sections of the steering gear box instead of to its bottom.

## Claims

1. Steering gear arrangement for a vehicle provided with steerable wheels and a chassis provided with a frame whereby the steering gear is arranged in a steering gear box which is fitted firmly to the vehicle frame,
**characterised in that** the steering gear box (10) is provided with a removable wall section (21) and that the control gear (11) is removably fastened to the wall section (21).

2. Arrangement according to patent claim 1, **characterised in that** the wall section (21) is removably fastened by bolted connections to the steering gear box (10).

3. Steering gear arrangement according to patent claim 1 or 2, **characterised in that** the wall section takes the form of a bottom (21).

4. Steering gear arrangement according to any one of patent claims 1-3,
**characterised in that** the steering gear box (10) has a parallelepipedic shape.

5. Steering gear arrangement according to any one of patent claims 1-4, **characterised in that** the steering gear box (10) has a front end wall (19) and a rear end wall (18) and the latter is intended to be removably connected to a cross-member (2) arranged in front of the front wheels of the vehicle.

6. Steering gear arrangement according to patent claim 5, **characterised in that** the front end wall (19) is provided with an aperture for a rotatable shaft (20) which connects a bevel gear (12) to the steering gear (11), and the end wall (18) is provided with an aperture intended for a control rod (13) which connects the steering gear (11) to the vehicle's steering system.

## Patentansprüche

1. Lenkgetriebeanordnung für ein mit lenkbaren Rädern und einem mit einem Rahmen versehenen Fahrgestell versehenes Fahrzeug, wobei das Lenkgetriebe in einem Lenkgetriebekasten angeordnet ist, der am Fahrzeugrahmen fest angebracht ist, **dadurch gekennzeichnet, daß** der Lenkgetriebekasten (10) mit einem abnehmbaren Wandteil (21) versehen ist und das Lenkgetriebe (11) am Wandteil (21) abnehmbar befestigt ist.

2. Anordnung nach Anspruch 1, **dadurch gekennzeichnet, daß** der Wandteil (21) durch Schraubverbindungen am Lenkgetriebekasten (10) abnehmbar befestigt ist.

3. Lenkgetriebeanordnung nach Anspruch 1 oder 2, **dadurch gekennzeichnet, daß** der Wandteil die Form eines Bodens (21) hat.

4. Lenkgetriebeanordnung nach einem der Ansprüche 1 - 3, **dadurch gekennzeichnet, daß** der Lenkgetriebekasten (10) eine Parallelepipedform hat.

5. Lenkgetriebeanordnung nach einem der Ansprüche 1 - 4, **dadurch gekennzeichnet, daß** der Lenkgetriebekasten (10) eine vordere Endwand (19) und eine hintere Endwand (18) aufweist und die letztgenannte dazu gedacht ist, mit einem vor den Vorderrädern des Fahrzeugs angeordneten Querträger (2) abnehmbar verbunden zu werden.

6. Lenkgetriebeanordnung nach Anspruch 5, **dadurch gekennzeichnet, daß** die vordere Endwand (19) mit einer Öffnung für eine drehbare Welle (20) versehen ist, die ein Kegelrad (12) mit dem Lenkgetriebe (11) verbindet, und die Endwand (18) mit einer Öffnung versehen ist, die für eine Steuerstange (13) gedacht ist, die das Lenkgetriebe (11) mit dem Lenksystem des Fahrzeugs verbindet.

## Revendications

1. Agencement de mécanisme de direction pour un véhicule pourvu de roues directrices et d'un châssis pourvu d'un bâti de sorte que le mécanisme de direction est disposé dans un boîtier de mécanisme de direction qui est fixé fermement sur le bâti de véhicule, **caractérisé en ce que** le boîtier de mécanisme de direction (10) est pourvu d'une section de paroi amovible (21) et **en ce que** le mécanisme de commande (11) est fixé de façon amovible sur la section de paroi (21).

2. Agencement selon la revendication 1, **caractérisé en ce que** la section de paroi (21) est fixée de façon amovible par des liaisons boulonnées sur le boîtier de mécanisme de direction (10).

3. Agencement de mécanisme de direction selon la revendication 1 ou 2, **caractérisé en ce que** la section de paroi prend la forme d'un fond (21).

4. Agencement de mécanisme de direction selon l'une quelconque des revendications 1 à 3, **caractérisé en ce que** le boîtier de mécanisme de direction (10) a une forme parallélépipédique.

5. Agencement de mécanisme de direction selon l'une quelconque des revendications 1 à 4, **caractérisé en ce que** le boîtier de mécanisme de direction (10) possède une paroi d'extrémité avant (19) et une paroi d'extrémité arrière (18) et la dernière est prévue pour être reliée de façon amovible à un élément transversal (2) disposé en avant des roues avant du véhicule.

6. Agencement de mécanisme de direction selon la revendication 5, **caractérisé en ce que** la paroi d'extrémité avant (19) est pourvue d'une ouverture pour un arbre rotatif (20) qui relie un pignon conique (12) au mécanisme de direction (11), et la paroi d'extrémité (18) est pourvue d'une ouverture prévue pour une biellette (13) qui relie le mécanisme de direction (11) au système de direction de véhicule.
